(19) **Europäisches Patentamt**
**European Patent Office**
**Office européen des brevets**

(11) Veröffentlichungsnummer: **0 253 001**
**A1**

(12) **EUROPÄISCHE PATENTANMELDUNG**

(21) Anmeldenummer: **86109554.5**

(22) Anmeldetag: **12.07.86**

(51) Int. Cl.⁴: **B29C 45/73**

(43) Veröffentlichungstag der Anmeldung:
**20.01.88 Patentblatt 88/03**

(84) Benannte Vertragsstaaten:
**AT BE CH DE FR GB IT LI LU NL SE**

(71) Anmelder: **AGRU ALOIS GRUBER & SOHN OHG**
**Grünburger Strasse 41**
**A-4540 Bad Hall(AT)**

(72) Erfinder: **Barainsky, Rudolf**
**Ring Strasse 5**
**D-4973 Vlotho(DE)**

(74) Vertreter: **Rupprecht, Klaus, Dipl.-Ing.**
**Am Römerhof 35**
**D-6000 Frankfurt (Main) 90(DE)**

(54) Verfahren und Vorrichtung zum Kühlen von geteilten Spritzgiessformen.

(57) Bei einem Verfahren zum Temperieren, also Erwärmen oder Kühlen, von geteilten Spritzgießformen wird das Temperiermedium zunächst bei geschlossener Form durch vorgesehene Temperierkanäle gesaugt. Anschließend erfolgt ein Hindurchsaugen von Luft. Auf diese Weise sind die Formteile und ggf. auch zugehörige Kernteile nach dem Öffnen der Form und Entformen des Werkstücks im vollständig trockenem Zustand, so daß die geteilte Form ohne weitere Trocknungsoperation wieder zusammengebaut und erneut eingesetzt werden kann.

Bei einer zugehörigen Vorrichtung zur Durchführung dieses Verfahrens ist die mit Temperierkanälen versehene Spritzgießform an einen Temperiermedium-Kreislauf angeschlossen, der stromaufwärts mit einem Ventil versehen ist, über den wechselweise Temperiermedium oder Luft in den Kreislauf einspeisbar ist.

Fig. 1

EP 0 253 001 A1

## Verfahren und Vorrichtung zum Kühlen von geteilten Spritzgießformen

Die Erfindung bezieht sich auf ein Verfahren zum Temperieren von geteilten Spritzgießformen mittels eines durch Temperiermediumkanäle strömenden Temperiermediums sowie auf eine Vorrichtung zur Durchführung des Temperierverfahrens.

Es ist bekannt, einteilige Formen zur Herstellung von Spritzgießartikeln zu kühlen, um die hergestellten Spritzgießartikel, vor allen Dingen aus Kunststoff, schneller zu verfestigen und auf diese Weise die für einen Arbeitszyklus notwendige Zeit zu verringern und somit die Wirtschaftlichkeit des Produktionsvorganges zu steigern. Als Kühlmittel wird in aller Regel Wasser eingesetzt.

Eine derartige Steigerung der Produktivität wird naturgemäß auch für geteilte Spritzgießformen angestrebt, die oft zur Herstellung von Spritzgießartikeln mit Hinterschneidungen oder anderem komplizierten technischen Aufbau notwendig sind. Bisher war es aber nicht möglich, mit vertretbarem Aufwand bei geteilten Spritzgießformen durch Kühlung eine signifikante Produktivitätsverbesserung durch Kühlung herbeizuführen, da sich zumindest Reste der Kühlflüssigkeit, auch bei deren vorheriger Entfernung aus den Kühlmittelkanälen, beim Zerlegen der geteilten Form und auch bei geteilten und gekühlten Kernen an den Teilungsflächen ablagern. Als Folge hiervon müssen die Teile der Formen und Kerne vor dem erneuten Zusammenbau sorgfältig gereinigt und getrocknet werden, da es anderweitig beim Spritzgießvorgang und der damit verbundenen Erwärmung zur Dampfblasenbildung kommt, wodurch die zu spritzenden Werkstücke beschädigt und auch unbrauchbar gemacht werden können. Diese Trocknung und Reinigung der Formteile ist aber sehr zeitaufwendig und verhindert somit praktisch vollständig die an sich gewünschte Verringerung der erforderlichen Zeit pro Arbeitszyklus oder Schuß.

Die Aufgabe der Erfindung besteht somit darin, ein Verfahren sowie eine Vorrichtung zu schaffen, mit welchen es möglich ist, auch bei geteilten Spritzgießformen einschließlich geteilten Spritzgießkernen eine Temperierung mit dem Ziel der verstärkten Abführung oder Zufuhr von Wärme beim Spritzgießen zu erreichen, ohne daß es anschließend nach dem Entformen des Werkstückes der beschriebenen zeitaufwendigen Reinigung der Formteile bedarf.

Diese Aufgabe ist bei dem erfindungsgemäßen Verfahren dadurch gelöst, daß zunächst das Temperiermedium durch die Temperierkanäle der geschlossenen Spritzgießform gesaugt wird, daß nach erfolgter Temperierung die Zufuhr des Temperiermediums unterbrochen und dieses sodann aus den Temperierkanälen abgesaugt wird und daß anschließend ein Gas derart heftig durch die Temperiermediumkanäle gesaugt wird, daß vorhandene Reste der Kühlflüssigkeit praktisch restlos entfernt werden, worauf die Spritzgießform geöffnet wird.

Es hat sich gezeigt, daß bei einem Vorgehen entsprechend dem erfindungsgemäßen Verfahren auch bei geteilten und technisch recht komplexen Spritzgießformen eine quasi restlose Entfernung der Kühl-oder Erwärmungsflüssigkeit aus dem System möglich ist, und zwar in jedem Fall in einem derartigen Ausmaße, daß es zu keiner Dampfblasenbildung der Flüssigkeit mehr kommt. Die hergestellten Werkstücke zeigen deshalb auch keinerlei Einwirkungen irgendwelcher Dampf-oder Gasblasenbildung aus der Flüssigkeit. Wesentlich ist gemäß der Erfindung, daß sowohl das Temperiermedium als auch anschließend das Gas durch die Kanäle gesaugt werden. Vergleichsversuche haben gezeigt, daß bei einem Hindurchpressen der Flüssigkeit und/oder des Gases durch die Kanäle die angestrebte restlose Säuberung des Temperiersystems in der geteilten Spritzgießform einschließlich dazugehöriger geteilter Kerne nicht vollständig möglich ist.

Das erfindungsgemäße Verfahren zeigt somit einen Weg, auch geteilte Spritzgießformen einschließlich deren Kerne, die ebenfalls geteilt sein können, wirksam zu temperieren, wobei es dann anschließend der zeitaufwendigen Reinigung der Formteile nicht mehr bedarf. Der an sich erforderliche zusätzliche Arbeitsgang der Spülung mit dem Gas kann so mechanisiert werden, daß der erforderliche Zeitaufwand vergleichsweise sehr klein ist und die Wirtschaftlichkeit des erfindungsgemäßen Verfahrens nicht in Frage stellt. Ein weiteres Merkmal des erfindungsgemäßen Verfahrens geht dahin, daß die Temperiermediumkanäle stromaufwärts der Spritzgießform zur Atmosphäre geöffnet werden und Luft durch die Kanäle gesaugt wird. Es handelt sich hierbei um ein besonders einfaches Vorgehen. Der Temperiermediumkanal wird vor seinem Übergehen in die Spritzgießform kurz vor der Spritzgießmaschine oder auch innerhalb derselben mit einem Ventil versehen, mit dem die ursprünglich vorhandene Flüssigkeitsströmung abgestellt und eine Öffnung zur Atmosphäre hin hergestellt werden kann. Mit den bisher bereits vorhandenen Mitteln zum Absaugen des Temperiermediums aus der Spritzgießform wird sodann die eintretende Luft abgesaugt und kann anschließend ebenfalls wiederum in die Atmosphäre abgegeben werden.

Die erfindungsgemäße Vorrichtung zur Durchführung des erfindungsgemäßen Verfahrens ist dadurch gekennzeichnet, daß die mit einem oder mehreren Temperiermediumkanälen versehene Spritzgießform an einen Temperiermediumkreislauf angeschlossen ist, der stromaufwärts der Spritzgießform mit einem Ventil versehen ist, mit dem der Flüssigkeitszulauf und/oder die Gaszufuhr im Kreislauf jeweils herstellbar sowie abstellbar sind, und daß stromabwärts der Spritzgießform eine Pumpe angeordnet ist.

Die Pumpe ist zur Förderung des Temperiermediums ohnehin erforderlich und kann so ausgewählt werden, daß sie auch vergleichsweise große Mengen von Gas einschließlich Luft fördern kann, was zu einer Vereinfachung der erfindungsgemäßen Vorrichtung führt.

Schließlich kann nach einem anderen Merkmal der Erfindung der Kreislauf zwischen Ventil und Pumpe offen ausgebildet sein. Eines geschlossenen Drucksystems für Temperiermedium und/oder Gas bedarf es somit nicht.

Weitere Einzelheiten, Merkmale und Vorteile der Erfindung ergeben sich aus der folgenden Beschreibung eines bevorzugten Ausführungsbeispiels sowie anhand der schematischen Zeichnung. Es zeigen:

Fig. 1 einen Temperiermedium-Kreislauf für einen Spritzgießkern mit umlaufendem Temperiermedium;

Fig. 2 den Gegenstand der Fig. 1 mit abgeschaltetem oder unterbrochenem Temperiermedium-Zulauf zum Absaugen des im Spritzgießkern vorhandenen Temperiermediums und

Fig. 3 den Gegenstand der Fig. 1 mit Öffnung des durch den Spritzgießkern verlaufenden Temperiermedium-Kanals zur Atmosphäre zum Hindurchsaugen von Luft durch den oder die im Spritzgießkern befindliche Temperiermedium-Kanäle.

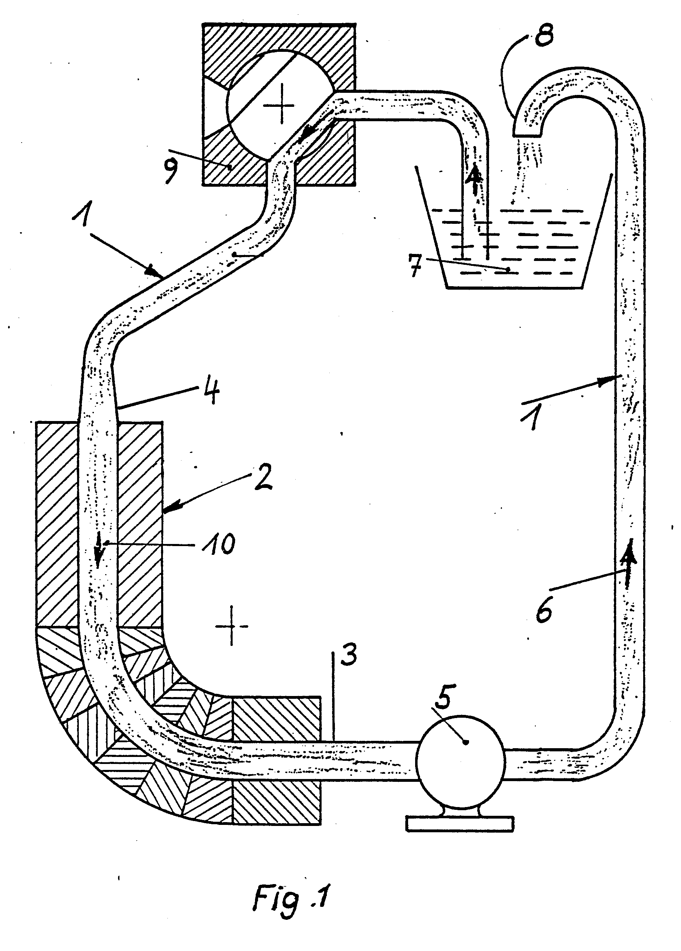

In den Fig. 1 bis 3 der Zeichnung ist in stark vereinfachter Form ein Temperiermedium-Kreislauf 1 für einen geteilten Spritzgießkern 2, im vorliegenden Fall für Rohrbögen, dargestellt. Der geteilte Spritzgießkern 2 ist Bestandteil einer ebenfalls geteilten, jedoch nicht dargestellten ihn umgebenden Spritzgießform, die die äußere Kontur des zu fertigenden Rohrbogens bestimmt. Der Spritzgießkern 2 definiert die Innenabmessungen dieses ebenfalls nicht gezeigten Rohrbogens. Spritzgießkern 2 sowie die nicht gezeigte Spritzgießform sind Bestandteile einer gleichfalls nicht gezeigten Spritzgießmaschine. Spritzgießkern, äußere Spritzgießform und Spritzgießmaschine sind herkömmlich, so daß auf eine nähere Erläuterung verzichtet wird.

Der Temperaturmedium-Kreislauf oder Kreislauf 1 besteht im Bereich der freien Enden 3 und 4 des Spritzgießkerns 2 aus flexiblen Rohrleitungen, beispielsweise Schläuchen, so daß der Spritzgießkern zusammen mit dem auf ihm angeordneten Werkstück, im vorliegenden Fall einem Rohrbogen, ohne Schwierigkeiten aus der ihn umgebenden Spritzgießform bzw. der Spritzgießmaschine entnommen werden kann. Im übrigen kann der Kreislauf 1 aus Rohrleitungen bestehen.

Stromabwärts des Spritzgießkernes 2 ist eine Pumpe 5 zum Hindurchsaugen des Temperiermediums 5 in Richtung der Pfeile 6 vorgesehen. Wie unten noch näher erläutert wird, saugt diese Pumpe 5 in einem anderen Verfahrensschritt ebenfalls Luft in Richtung der Pfeile 6 durch den Spritzgießkern 2.

Der Kreislauf 1 ist als offener Kreislauf ausgebildet; das durch den Spritzgießkern 2 hindurchgesaugte Temperiermedium wird somit in einem Behälter 7 gesammelt. Wenn Luft durch den Kreislauf 1 gesaugt wird, kann diese am offenen Ende 8 des Kreislaufs 1 in die Atmosphäre austreten.

Stromaufwärts des geteilten Spritzgießkerns 2 ist ein als Mehrwegventil ausgebildetes Ventil 9 vorgesehen, durch dessen Betätigung die Betriebszustände des Temperiermedium-Kreislaufs geändert werden können.

Bei dem in Fig. 1 gezeigten Betriebszustand wird durch die Pumpe 2 Temperiermedium im Kreislauf 1 umgepumpt. Das Temperiermedium kann hierbei entweder als Kühlmittel für den Spritzgießkern 2 sowie nach stattgefundenem Spritzgießvorgang des dann den Spritzgießkern 2 umgebenden Werkstücks dienen. Andererseits ist es auch möglich, daß der zum Werkstück zu verarbeitende Werkstoff eine angewärmte Spritzgießform einschließlich einem angewärmten Spritzgießkern 2 erfordert. In diesem Falle wird dann erhitztes Temperiermedium durch die Spritzgießform bzw. den Spritzgießkern gesaugt. In diesem Falle ist im Kreislauf 1 eine nicht gezeigte Heizvorrichtung für das Temperiermedium angeordnet; beispielsweise im Behälter 7. Andererseits kann im Falle einer Kühlung der Form auch eine Kühlvorrichtung an gleicher oder anderer Stelle des Kreislaufs 1 zur Kühlung des Temperiermediums vorgesehen werden.

Bei der Verarbeitung von Metallen und Kunststoffen, wie Polyethylen, erfolgt über den Kreislauf 1 eine Kühlung des Spritzgießkerns und der Spritzgießform. Im Falle der Verarbeitung von z.B. Polyamid kann über den Kreislauf 1 eine Erwärmung des Spritzgießkerns 2 und der Spritzgießform auf beispielsweise ca. 80° C erfolgen.

Die nicht gezeigte, den dargestellten geteilten Spritzgießkern 2 umgebende geteilte Spritzgießform weist natürlich eigene Kanäle für das im Kreislauf 1 umlaufende Temperiermittel auf, die parallel zum gezeigten Temperiermedium-Kanal 10 verlaufen können und stromaufwärts des Spritzgießkerns 2 vom Kreislauf 1 im Bereich des oberen Endes 4 abzweigen und stromabwärts im Bereich des unteren Endes 6 wiederum in den Kreislauf 1 einmünden.

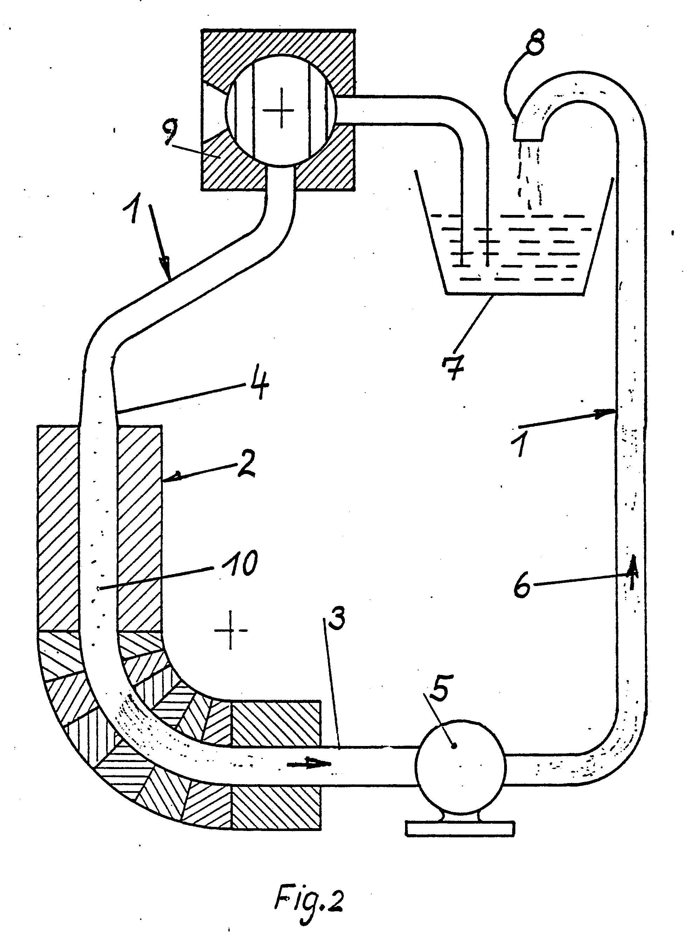

In Fig. 2 ist die Stellung des Ventils 9 gezeigt, in der die Zufuhr von Temperiermedium zum Spritzgießkern 2 unterbrochen wird. Bei laufender Pumpe 5 wird dabei das Temperiermedium aus dem Spritzgießkern 2, d.h. aus seinen Temperaturmedium-Kanälen 10 und dem stromaufwärts gelegenen Teil des Kreislaufs 1, bis zum Ventil 9 abgesaugt.

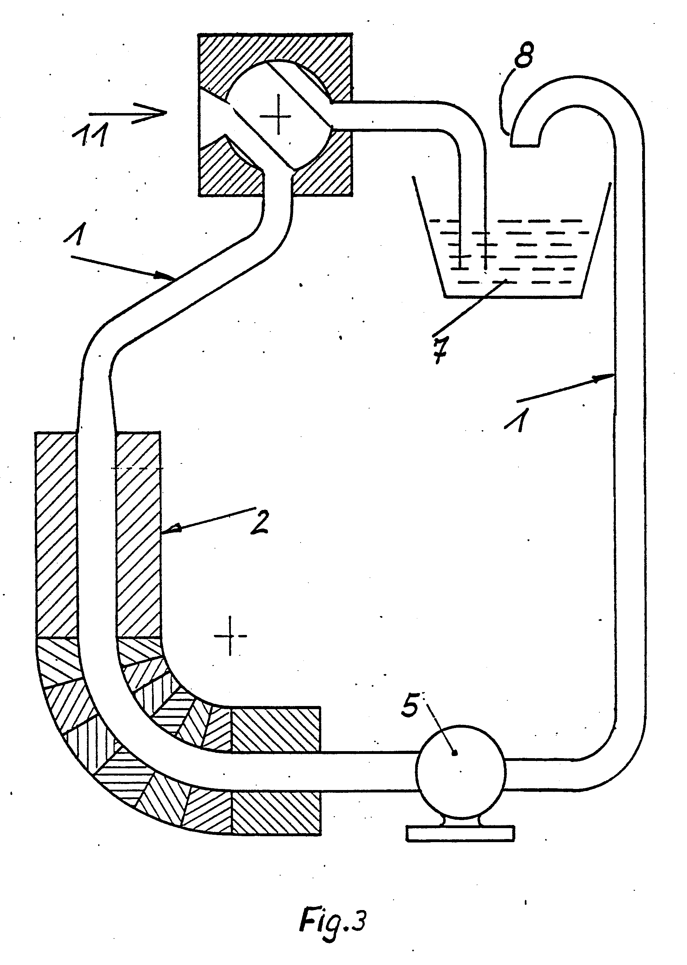

Gemäß Fig. 3 ist über das Ventil 9 im Anschluß an den Betriebszustand nach Fig. 2 der Kreislauf 1 stromaufwärts des Spritzgießkernes 2 mit der Atmosphäre verbunden, so daß entsprechend dem Pfeil 11 Luft in den Kreislauf 1 einströmen und durch die Pumpe 5 aus den Temperiermedium-Kanälen 10 abgesaugt werden kann. Dieses Absaugen erfolgt vergleichsweise heftig mit dem Ziel, daß sämtliche in den Temperiermedium-Kanälen 10 noch vorhandenen Reste an Temperiermedium sowie auch aus dem stromaufwärts des Spritzgießkernes 2 des Kreislaufs 1 vollständig entfernt werden.

Eine allgemein gültige Aussage darüber, mit welchem Unterdruck und mit welchem Durchsatz pro Zeiteinheit die Luft mittels der Pumpe 5 aus den Kanälen 10 abgesaugt werden muß, läßt sich exakt nicht angeben. Diese Parameter hängen jeweils von der Art des Spritzgießkernes 2, der eigentlichen Spritzgießform sowie vom Verlauf und Querschnitt der Temperaturmedium-Kanäle 10 ab. Einige wenige Versuche genügen jedoch, um im jeweiligen Anwendungsfall festzustellen, wann innerhalb einer vergleichsweise kurzen Zeitspanne die Temperaturmedium-Kanäle 10 restlos vom Temperaturmedium gesäubert sind bzw. dieses verdampft ist.

Ein Arbeitszyklus einer mit einer geteilten Spritzgießform und ggf. zugehörigem geteiltem Spritzgießkern 2 versehenen Spritzgießmaschine unter Benutzung des erfindungsgemäßen Verfahrens und Verwendung des Temperiermediums als Kühlmittel ist etwa wie folgt:

Zunächst wird der Spritzgießkern 2 und seine zugehörige Spritzgießform, die jeweils geteilt sind, zusammengebaut und an die Spritzgießmaschine angeschlossen. Sodann erfolgt die Herstellung des Werkstückes, das im vorliegenden Fall, wie erwähnt, ein Rohrbogen ist, durch Einspritzen von beispielsweise Kunststoff in den Zwischenraum zwischen Spritzgießkern 2 und Spritzgießform. Zur Beschleunigung des Abkühlvorganges des Werkstücks und zwar bis zu dem Zeitpunkt, in dem es Gestaltfestigkeit erreicht hat, wird Kühlmittel durch die Temperiermedium-Kanäle 10 mittels der Pumpe gesaugt, vgl. Fig. 1.

Sobald keine Kühlung mehr erforderlich ist, wird das Ventil in die in Fig. 2 gezeigte Stellung geschaltet, wobei der Kühlmittelzufluß zum Spritzgießkern 2 unterbrochen wird. Die Pumpe 4 läuft hierbei weiter, so daß das in den Temperiermedium-Kanälen 10 und im darüber befindlichen Teil des Kreislaufs 1 bis zum Ventil 9 befindliche Temperiermedium soweit wie möglich abgesaugt wird.

Anschließend wird das Ventil 9 in die Stellung gemäß Fig. 3 umgeschaltet, so daß bei weiterlaufender Pumpe 5 heftig Luft durch die Temperiermedium-Kanäle 10 gesaugt wird, was zu einer Abführung aller Reste von Kühlmittel aus den Kanälen 10, insbesondere längs der Stoßfugen der Einzelteile des Spritzgießkernes 2 bzw. der Spritzgießform, führt.

Im Anschluß hieran kann sodann die Spritzgießform geöffnet, das Werkstück zusammen mit dem Spritzgießkern 2 entnommen sowie anschließend letzterer gezogen werden. Da die Teile der Spritzgießform sowie des Spritzgießkernes 2 vollständig trocken sind, bedarf es keiner aufwendigen Reinigungsmanipulationen von anhaftendem Temperaturmedium. Spritzgießform und Spritzgießkern 2 können vielmehr sofort wieder zusammengebaut werden, um den vorstehend beschriebenen Arbeitszyklus dann unverzüglich erneut durchführen zu können.

Wird das Temperiermedium als Erhitzungsmedium für Kern und Form benutzt, so ändert sich an dem vorstehend beschriebenen Arbeitszyklus nichts. Es wird vielmehr anstelle der Abführung von Wärme Wärme auf den Kern und die Form und naturgemäß dann auch auf das zu formende Werkstück übertragen.

Als wesentliche Erkenntnis sei nochmals herausgestellt, daß das hier beschriebene vorteilhafte Arbeitsergebnis nur dann erreicht wird, wenn sowohl Temperaturmedium als auch die Luft durch die Temperaturmedium-Kanäle 10 hindurchgesaugt werden. Es hat sich gezeigt, daß ein zuverlässiges Arbeitsergebnis dann nicht erreichbar ist, wenn diese beiden Fluide durch den Kern und die Form hindurchgepreßt werden.

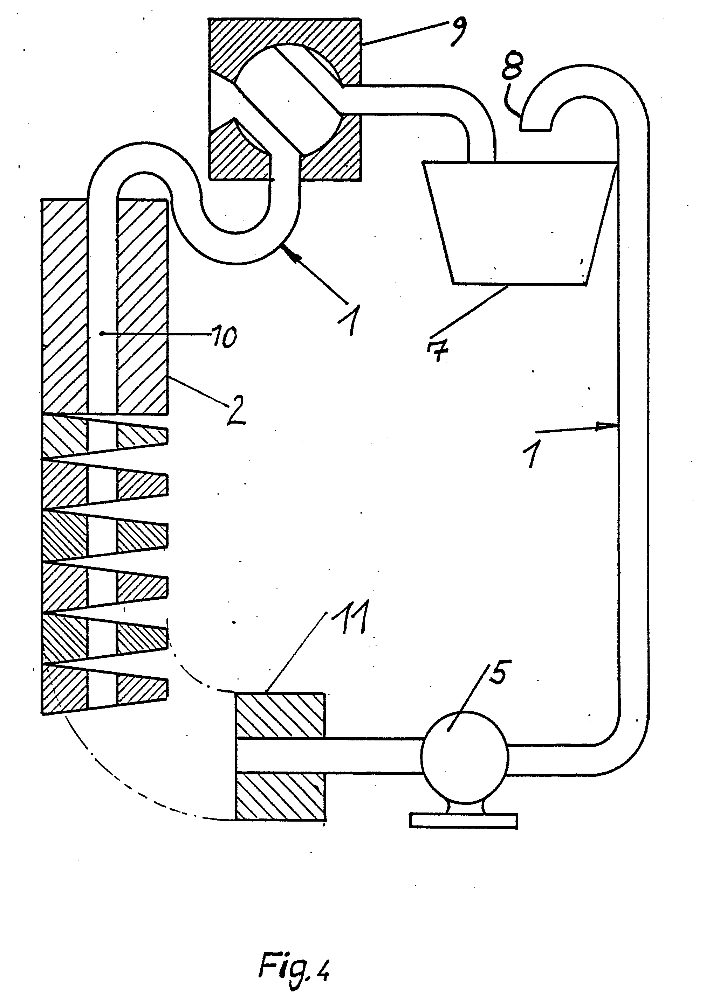

In der Fig. 4 ist die Vorrichtung mit gleicher Ventilstellung wie in Fig. 3 gezeigt, jedoch mit gezogenem Kern. Die in der Zeichnung vertikal angeordneten Teile des Kerns 2 sind durch nicht dargestellte Zugelemente, beispielsweise Seile, miteinander verbunden. Über diese Seile können die Segmente des Kerns 2 in dem in den Fig. 1 bis 3 gezeigten Zustant miteinander verspannt werden.

Der Kernteil 11 wird über die nicht gezeigte Spritzgießmaschine in die ebenfalls nicht gezeigte Form eingefahren und zur Anlage mit dem gekrümmtem Kern gemäß Fig. 1 bis 3 gezeigt.

Der Kern 2 ist in der europäischen Patentanmeldung 85 901 384.9 (PCT/DE 85/00115) in den Einzelheiten beschrieben. Diese Patentanmeldung wird insoweit vollinhaltlich zum Gegenstand der Offenbarung der vorliegenden Anmeldung gemacht.

## Ansprüche

1. Verfahren zum Temperieren von geteilten Spritzgießformen mittels eines durch Temperierkanäle strömenden Temperiermediums, dadurch gekennzeichnet, daß zunächst das Temperiermedium durch die Temperierkanäle (10) der geschlossenen Spritzgießform gesaugt wird, daß nach erfolgter Temperierung die Zufuhr des Temperiermediums unterbrochen und dieses sodann aus den Temperierkanälen (10) abgesaugt wird, und daß anschließend ein Gas derart heftig durch die Temperierkanäle (10) gesaugt wird, daß vorhandene Reste des Temperiermediums praktisch restlos daraus entfernt werden, worauf die Spritzgießform geöffnet wird.

2. Verfahren nach Anspruch 1, dadurch gekennzeichnet, daß die Temperierkanäle (10) stromaufwärts der Spritzgießform zur Atmosphäre hin geöffnet werden und daß Luft durch die Temperierkanäle (10) gesaugt wird.

3. Vorrichtung zur Durchführung des Verfahrens nach Anspruch 1 und 2, dadurch gekennzeichnet, daß die mit Temperierkanälen (10) versehene Spritzgießform an einen Temperaturmedium-Kreislauf (1) angeschlossen ist, der stromaufwärts der Spritzgießform mit einem Ventil (9) versehen ist, mit dem der Temperaturmedium-Zulauf und/oder die Gaszufuhr herstellbar sowie abstellbar sind und daß stromabwärts der Spritzgießform eine Pumpe (5) angeordnet ist.

4. Vorrichtung nach Anspruch 3, dadurch gekennzeichnet, daß der Temperaturmedium-Kreislauf (1) zwischen Ventil (9) und Pumpe (5) offen ausgebildet ist.

Fig .1

Fig.2

Fig.3

Fig. 4

<table>
<tr><td colspan="4" align="center">**EUROPÄISCHER RECHERCHENBERICHT**</td><td>Nummer der Anmeldung<br>EP 86 10 9554</td></tr>
</table>

**Europäisches Patentamt**

**EUROPÄISCHER RECHERCHENBERICHT**

Nummer der Anmeldung

EP 86 10 9554

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 151 243  (ALLEN)<br>* Insgesamt * | 1-4 | B 29 C  45/73 |
| | --- | | |
| A | US-A-4 184 834  (BARBER)<br>*  Spalte 7, Zeile 32 - Spalte 8, Zeile 10; Spalte 9, Zeilen 26-37; Figuren 1-4 * | 1,3 | |
| | --- | | |
| A | PATENTS ABSTRACTS OF JAPAN, Band 6, Nr. 240 (M-174)[1118], 27. November 1982; & JP-A-57 137 128 (MATSUI SEISAKUSHO K.K.) 24-08-1982 | 1-4 | |
| | --- | | |
| A | DE-B-1 296 333  (THERMOVOX)<br>* Spalte 4, Zeilen 14-34; Figur * | 1-4 | |
| | --- | | RECHERCHIERTE SACHGEBIETE (Int. Cl.4) |
| A | WO-A-8 504 604  (BARAINSKY)<br><br>& EP-A-0 211 832 (Kat. D) | | B 29 C<br>B 22 D |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 17-03-1987 | BOLLEN J.A.G. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82